# EUROPÄISCHE PATENTANMELDUNG

(11) **EP 1 906 035 A2**
(43) Veröffentlichungstag der Anmeldung: **02.04.2008**
(21) Anmeldenummer: 07017533.6
(22) Anmeldetag: 07.09.2007
(51) Int. Cl.: F16C 13/00, D21G 1/02

(54) **Durchbiegungssteuerbare Walze**

(30) Priorität: 27.09.2006 DE 102006045993
(71) Anmelder: Andritz Küsters GmbH & Co. KG, 47805 Krefeld (DE)
(72) Erfinder: Kubik, Klaus, 47918 Tönisvorst (DE)
(74) Vertreter: Kluin, Jörg-Eden

(57) **Zusammenfassung**

Die durchbiegungssteuerbare Walze (1), bei der ein Walzenmantel (2) um einen festen Träger (3) mittels mit Schmiermittel versorgten Drehlagern (8) drehbar und auf dem Träger mittels einer in einer Ringkammer (6) zwischen dem Träger (3) und dem Walzenmantel (2) angeordneten, hydrostatischen Lagervorrichtung abgestützt ist, die mit einer unter Druck stehenden Arbeitsflüssigkeit versorgbar ist, umfasst Dichtungsanordnungen (11) zwischen der Ringkammer (6) und den Drehlagern (8), die jeweils mindestens einen radial wirkenden, kolbenringartig ausgestalteten Dichtring (12) aufweisen.

## Beschreibung

Die Erfindung betrifft eine durchbiegungssteuerbare Walze, bei der ein Walzenmantel um einen festen Träger mittels mit Schmiermitteln versorgten Drehlagern drehbar und auf dem Träger mittels einer im Mantelinnenraum angeordneten, hydrostatischen Lagervorrichtung abgestützt ist, die mit einer unter Druck stehenden Arbeitsflüssigkeit versorgbar ist, wobei Dichtungsanordnungen zwischen dem Walzeninnenraum und den Drehlagern vorgesehen sind.

Eine derartige durchbiegungssteuerbare Walze ist aus der DE 35 26 283 C2 bekannt. Als hydrostatische Lagervorrichtung dient ein Druckraum zwischen Träger und Walzenmantel. Die diesem Druckraum zugeführte Arbeitsflüssigkeit, die für den Fall, dass die Walze beheizt sein soll, als Wärmeträgerflüssigkeit dient und ebenfalls beheizt ist, wird in einem ersten Kreislauf zu- und abgeführt. In einem zweiten Kreislauf werden die Drehlager mit Schmiermittel versorgt.

Zur Trennung der beiden Kreisläufe sind zwischen dem Mantelinnenraum und den Drehlagern Dichtungsanordnungen vorgesehen, die als einfache oder doppelt wirkende Gleitringdichtungen ausgestaltet sind.

Diese Gleitringdichtungen weisen die folgenden Nachteile auf:
a) Sie sind aufwendig in ihrer Herstellung und Montage;
b) Sie sind empfindlich gegen Verschmutzungen auf den Dichtflächen, die insbesondere bei Verlagerungen des Walzenmantels senkrecht zur Walzenachse die Dichtflächen beschädigen können, was zu einer unerwünschten Erhöhung der Leckrate der Walze führen kann.

Der Erfindung liegt die Aufgabe zugrunde, eine durchbiegungssteuerbare Walze mit verbesserter Dichtungsanordnung zu schaffen.

Diese Aufgabe wird durch die in Anspruch 1 wiedergegebene durchbiegungssteuerbare Walze gelöst.

Bei der erfindungsgemäßen durchbiegungssteuerbaren Walze umfassen die Dichtungsanordnungen jeweils mindestens einen radial wirkenden, kolbenringartig ausgestalteten Dichtring. Überraschenderweise hat sich gezeigt, dass mit dieser technisch sehr einfachen Dichtungsanordnung eine ausreichend hohe Dichtwirkung zwischen den beiden Kreisläufen für die gegebenenfalls beheizte Arbeitsflüssigkeit und die Schmierflüssigkeit erzielt wird. Darüber hinaus zeichnet sich die erfindungsgemäße durchbiegungssteuerbare Walze dadurch aus, dass deren Dichtungsanordnung unempfindlicher gegen die Ablagerung von Vercrackungen ist, wodurch die Betriebssicherheit erhöht wird.

Wenn vorstehend und im folgenden von "kolbenringartig" die Rede ist, so ist hiermit gemeint, dass die Dichtfläche von einer Mantelfläche - sei es durch die äußere, sei es durch die innere Mantelfläche eines Ringes - und einer Seitenfläche des Ringes gebildet wird.

Bei einer ersten möglichen Variante der erfindungsgemäßen, durchbiegungssteuerbaren Walze ist die Dichtfläche des Dichtringes von seinem Innenumfang und sein Sitz durch eine in dem Walzenmantel vorgesehene Ringnut ausgebildet. Der Dichtring ruht dann mit seinem äußeren Rand in einer in dem Walzenmantel vorgesehenen Ringnut. Die Dichtfläche wird dementsprechend von seiner nach innen gerichteten Ringfläche gebildet, die sich mit dem Walzenmantel mit dreht und auf der Mantelfläche des Trägers abgleitet.

Bei einer weiteren, bevorzugten Ausführungsform der erfindungsgemäßen durchbiegungssteuerbaren Walze ist die Dichtfläche von der äußeren Mantelfläche des Dichtringes gebildet. Der Sitz des Dichtringes ist dann in dem Träger ausgebildet.

Eine derartige Dichtungsanordnung lässt Verschiebungen zwischen dem rotierenden Walzenmantel und dem feststehenden Träger in Richtung der Walzenachse ohne weiteres zu.

Um zu vermeiden, dass es aufgrund von Verlagerungen senkrecht zur Längsachse der Walze zu starken Spannungen kommt, die zu einer wesentlichen Erhöhung des Verschleißes der kolbenringartigen Dichtringe und auch der mit den Dichtflächen der Dichtringe zusammenwirkenden Gegendichtflächen kommt, ist es besonders bevorzugt, die als Dichtsitz dienende Ringnut zur Aufnahme eines Dichtringes mit einer Tiefe auszugestalten, die es dem Kolbenring ermöglicht, innerhalb der Ringnut unter Beibehaltung seiner Dichtwirkung Verlagerungen durchzuführen, die der maximalen, während des Betriebes der durchbiegungssteuerbaren Walze zu vermutenden Auslenkungen senkrecht zur Längserstreckung derselben entsprechen.

Zwar ist die mit einem einzigen Dichtring erzielte Dichtwirkung für Anwendungen, bei denen relativ hohe Leckraten zwischen den beiden Kreisläufen akzeptabel sind, wie beispielsweise dann, wenn es sich bei der Arbeits- und Schmierflüssigkeit um denselben Stoff handelt, ausreichend, besonders bevorzugt ist es zwecks Erhöhung der Dichtwirkung jedoch, wenn jede Dichtungsanordnung drei in Längsrichtung der Walze voneinander beabstandete Dichtringe umfasst.

Für diese Dichtringe sind dann - besonders bevorzugt - jeweils ein separater Sitz vorgesehen, so dass sich insgesamt pro Dichtungsanordnung eine kaskadenartige Anordnung der drei Dichtringe ergibt.

Die Dichtringe können - wie Kolbenringe im engeren Sinne auch - aus einem metallischen Werkstoff bestehen.

Es ist jedoch auch insbesondere dann, wenn die Temperatur der Arbeitsflüssigkeit auf relativ niedrige Werte, beispielsweise kleiner 250° C beschränkt ist, möglich, die Dichtringe aus Kunststoff herzustellen.

Schließlich können die Dichtringe auch aus Keramik bestehen.

Die Dichtringe können - besonders bevorzugt - auf Seiten der Dichtflächen mit einer reibungsvermindernden Schicht versehen sein.

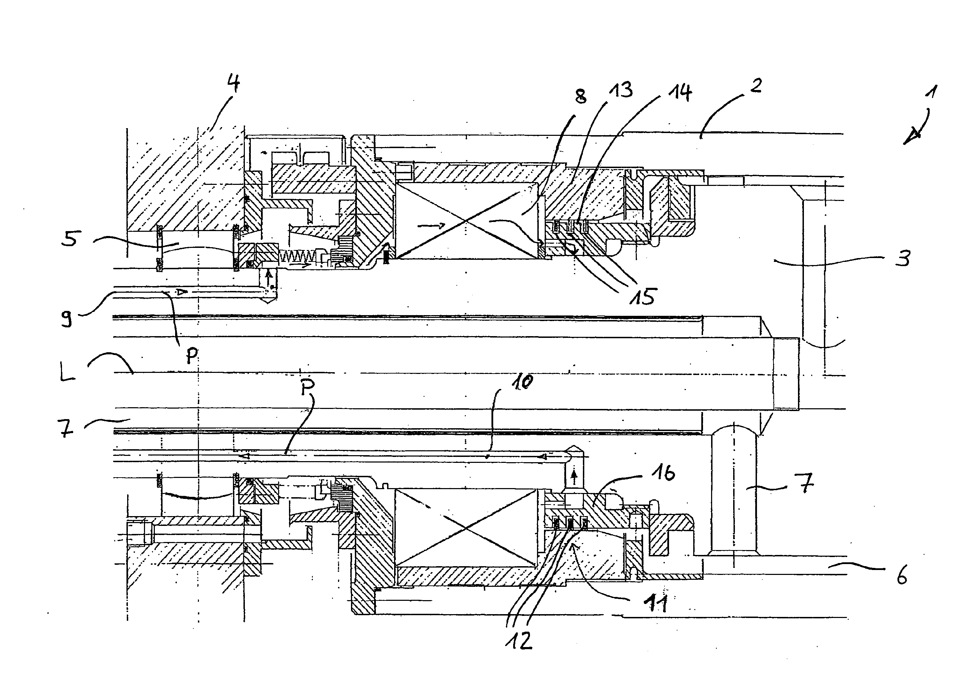

In der Zeichnung ist - schematisch und ausschnittsweise - ein Ausführungsbeispiel einer erfindungsgemäßen Walze dargestellt. Erkennbar ist in der Zeichnung lediglich der linke Endbereich der Walze, da der rechte Endbereich eine identisch ausgebildete Dichtungsanordnung umfasst.

Das dargestellte Ausführungsbeispiel der erfindungsgemäßen, durchbiegungssteuerbaren Walze 1 umfasst einen hohlen Walzenmantel 2, der um einen drehfest gehaltenen Träger 3 drehbar gelagert ist. Dieser ist in einem Ständer 4 unter Zwischenschaltung eines Pendellagers 5 gelagert. Der Walzenmantel 2 wirkt mit in der Praxis meist mit einer in der Zeichnung nicht dargestellten Gegenwalze zur Bildung eines Walzenspaltes zusammen. In diesem Walzenspalt kann Bahnmaterial durch Druck und Temperatur behandelt werden, beispielsweise Papier oder sonstiges Fasermaterial, Kunststoff, Textilien, Folien und dergleichen.

In dem zwischen der inneren Mantelfläche des Walzenmantels 2 und dem Träger 3 gebildeten Spaltraum 6 - auch Mantelinnenraum bezeichnet - ist eine hydrostatische Lagervorrichtung, die in der Zeichnung nicht im Einzelnen dargestellt ist, vorgesehen. Sie ist in bekannter Weise von Last tragenden, einzelnen Lagerelementen oder von einer oder mehreren, sich parallel zur Längsachse L der Walze erstreckenden, mittels zwischen dem Träger und der inneren Mantelfläche des Walzenmantels wirkenden Längsdichtungen begrenzten Druckkammern gebildet. Der hydrostatischen Lagervorrichtung wird Arbeitsflüssigkeit - im Falle einer beheizten Walze nach Aufheizung - über einen Kanal 7 unter einem vorgegebenen Druck zugeführt und - in an sich bekannter und in der Zeichnung nicht dargestellter Weise - über eine Drossel abgeführt und der erneuten Druckbeaufschlagung und gegebenenfalls Aufheizung zugeführt.

Der Drehlagerung des Walzenmantels 2 auf dem Träger 3 dienen an den beiden Enden des Walzenmantels 2 vorgesehene Drehlager 8, die in dem dargestellten Ausführungsbeispiel als Wälzlager ausgebildet sind und von denen lediglich das linke erkennbar ist.

Die Schmierung der Drehlager 8 erfolgt durch über einen Vorlauf 9 im Sinne der Pfeile P zugeführtes und über einen Rücklauf 10 rückgeführtes in einem zweiten Kreislauf umgepumptes Schmiermittel.

Zur Trennung der beiden Kreisläufe sind zwischen dem Mantelinnenraum - der Ringkammer 6 - und den Drehlagern 8 Dichtungsanordnungen 11 vorgesehen. Sie umfassen drei in Richtung der Längsachse L voneinander beabstandete Dichtringe 12, die unter einer radial nach außen gerichteten, nachgiebigen Kraft an einer von einer Glocke 13, die in dem Endbereich des Walzenmantels 2 vorgesehen ist und mit diesem umläuft, gebildeten Dichtfläche 14 anliegen. Die Dichtringe 12 sind in Ringnuten 15 gelagert, welche in eine mit dem Träger 3 fest verbundene Dichtungsaufnahme 16 eingearbeitet sind. Die Dichtfläche 14 weist in Richtung der Längsachse L eine Länge auf, die Relativverlagerungen zwischen dem Walzenmantel 2 und dem Träger 3 in Längsrichtung, wie sie beispielsweise durch Temperaturschwankungen entstehen können, unter Beibehaltung der Anlage der Dichtringe 12 an der Dichtfläche 14 zulässt.

Damit die Dichtungsanordnungen 11 auch Verlagerungen zwischen dem Walzenmantel 2 und dem Träger 3 senkrecht zur Längsachse L aufnehmen können, weisen die Ringnuten 15 eine Tiefe auf, die größer ist als die Eindringtiefe der Dichtringe. Die Dichtringe 12 sind mit anderen Worten in den Ringnuten 15 mit einem gewissen radialen Spiel gelagert.

Versuche haben gezeigt, dass - je nach vorgesehenem Einsatzzweck für die durchbiegungssteuerbare Walze - die Dichtungsringe aus Kunststoff, Metall oder Keramik bestehen können, wobei keramische Dichtringe insbesondere dann Verwendung finden, wenn die Dichtungsanordnung besonders widerstandsfähig gegen hohe Temperaturen sein muss, wie dies beispielsweise bei hoch beheizten Walzen und insbesondere hohen Rotationsgeschwindigkeiten und der damit durch Reibung verbundenen, hohen Temperaturentwicklung der Fall ist. Unabhängig davon, aus welchem Material die Dichtungsringe hergestellt sind, können ihre Dichtflächen mit reibungsverminderndem Material beschichtet sein.

### Bezugszeichenliste:

- 1: Walze
- 2: Walzenmantel
- 3: Träger
- 4: Ständer
- 5: Pendellager
- 6: Ringkammer
- 7: Kanal
- 8: Drehlager
- 9: Vorlauf
- 10: Rücklauf
- 11: Dichtungsanordnungen
- 12: Dichtring
- 13: Glocke
- 14: Dichtfläche
- 15: Ringnuten
- 16: Dichtungsaufnahme
- L: Längsachse
- P: Pfeil

## Patentansprüche

1. Durchbiegungssteuerbare Walze,
bei der ein Walzenmantel (2) um einen festen Träger (3) mittels mit Schmiermittel versorgten Drehlagern (8) drehbar und auf dem Träger (3) mittels einer in einer Ringkammer (6) zwischen dem Träger (3) und dem Walzenmantel (2) angeordneten, hydrostatischen Lagervorrichtung abgestützt ist, die mit einer unter Druck stehenden Arbeitsflüssigkeit versorgbar ist, wobei die Dichtungsanordnungen (11) zwischen der Ringkammer (6) und den Drehlagern (8) vorgesehen sind,
**dadurch gekennzeichnet,**
**dass** die Dichtungsanordnungen (11) jeweils mindestens einen radial wirkenden, kolbenringartig ausgestalteten Dichtring (12) umfassen.

2. Durchbiegungssteuerbare Walze nach Anspruch 1, **dadurch gekennzeichnet, dass** die Dichtfläche des Dichtringes (12) von seinem Innenumfang und sein Sitz durch eine in dem Walzenmantel (2) vorgesehene Ringnut gebildet ist.

3. Durchbiegungssteuerbare Walze nach Anspruch 1, **dadurch gekennzeichnet, dass** die Dichtfläche des Dichtringes (12) von seinem Außenumfang und sein Sitz durch eine in dem Träger (3) vorgesehene Ringnut (15) bzw. in einer mit dem Träger (3) verbundenen Dichtungsaufnahme (16) vorgesehene Ringnut (15) gebildet ist.

4. Durchbiegungssteuerbare Walze nach Anspruch 2 oder 3, **dadurch gekennzeichnet, dass** die Ringnut (15) eine Tiefe aufweist, die größer als die Eindringtiefe des Dichtringes (12) ist.

5. Durchbiegungssteuerbare Walze nach einem der Ansprüche 1 bis 4, **dadurch gekennzeichnet, dass** jede Dichtungsanordnung (11) drei in Längsrichtung (L) der Walze (1) voneinander beabstandete Dichtringe (12) umfasst.

6. Durchbiegungssteuerbare Walze nach Anspruch 5, **dadurch gekennzeichnet, dass** für jeden Dichtring (12) eine separate Ringnut (15) vorgesehen ist.

7. Durchbiegungssteuerbare Walze nach einem der Ansprüche 1 bis 6, **dadurch gekennzeichnet, dass** die Dichtringe (12) aus einem metallischen Werkstoff bestehen.

8. Durchbiegungssteuerbare Walze nach einem der Ansprüche 1 bis 6, **dadurch gekennzeichnet, dass** die Dichtringe (12) aus Kunststoff bestehen.

9. Durchbiegungssteuerbare Walze nach einem der Ansprüche 1 bis 6, **dadurch gekennzeichnet, dass** die Dichtringe (12) aus Keramik bestehen.

10. Durchbiegungssteuerbare Walze nach einem der Ansprüche 1 bis 9, **dadurch gekennzeichnet, dass** die Dichtflächen der Dichtringe mit einer reibungsvermindernden Schicht beschichtet sind.
